# FASCICULE DE BREVET EUROPEEN

(11) **EP 3 339 674 B1**
(45) Date de publication et mention de la délivrance du brevet: **24.06.2020**
(21) Numéro de dépôt: 17205011.4
(22) Date de dépôt: 01.12.2017
(51) Int. Cl.: G01L 19/02, G01L 19/14, G01D 11/24, F16F 1/38, F16F 1/373

(54) **SUPPORT DE CAPTEUR**
SENSORHALTER
SENSOR SUPPORT

(30) Priorité: 20.12.2016 FR 1662954
(43) Date de publication de la demande: 27.06.2018
(73) Titulaire: HellermannTyton s.a.s., 78197 Trappes (FR)
(72) Inventeur: NAMPON, Damien, 94480 ABLON SUR SEINE (FR)
(74) Mandataire: GIE Innovation Competence Group

(56) Documents cités:
- WO-A1-2011/070540
- FR-A1- 2 707 002
- US-A1- 2014 055 943

## Description

### DOMAINE TECHNIQUE

La présente invention concerne un support de capteur sur une structure.

### ARRIERE-PLAN TECHNOLOGIQUE DE L'INVENTION

Dans un véhicule ou un bâtiment technique, un dispositif intermédiaire de fixation est nécessaire pour solidariser des capteurs à un élément de structure. Lesdits dispositifs comprennent typiquement une embase de fixation de laquelle s'étend un membre support de capteur comprenant un cadre et un coussin amortisseur arrangé entre le cadre et le capteur de sorte à isoler le capteur de vibrations se propageant dans ladite structure, lesdites vibrations pouvant perturber les mesures du capteur. Ledit coussin amortisseur est un élément souple à base de caoutchouc collé dans le cadre. De plus, ces dispositifs disposent d'une liaison électrique à la masse permettant d'évacuer vers la terre toute charge électrique qui pourrait s'accumuler au niveau du capteur.

Un tel dispositif remplissant plusieurs fonctions et comprenant plusieurs éléments agencés ensembles est à la fois complexe et long à réaliser.

Il est connu du document US 2014/055943 A1 une solution de pattes métalliques prévues pour supporter un disque dur, chaque patte métallique comportant des éléments amortisseurs.

### RESUME DE L'INVENTION

La présente invention vise à remédier aux inconvénients mentionnés précédemment en proposant une solution simple et économique et notamment un support adapté à solidariser un capteur à une structure, ledit support comprenant un membre amortisseur agencé dans un cadre et adapté, en utilisation, à entourer le capteur et à l'isoler de vibrations se propageant dans ladite structure.

Avantageusement le support est une pièce monobloc, le membre amortisseur et le cadre étant intégralement venus de matière.

De plus, le cadre est pourvu d'une ouverture par laquelle le capteur peut être inséré dans le cadre et, d'une porte de fermeture adaptée à fermer ladite ouverture, une portion du membre amortisseur étant venue de matière avec la porte de fermeture.

Le support comprend de plus une charnière agencée entre le cadre et la porte de fermeture de sorte à permettre l'ouverture et la fermeture de ladite porte, ladite charnière de porte étant venue de matière avec le cadre, le membre amortisseur et la porte.

Par ailleurs, le membre amortisseur comprend une portion élastique et une portion rigide, la portion élastique étant arrangée entre le cadre et la portion rigide de sorte que, en utilisation lorsque le capteur est mis en place, la portion élastique se déforme permettant à la portion rigide de s'agencer contre ledit capteur, la portion élastique exerçant sur ladite portion rigide une force assurant le contact de la portion rigide avec le capteur.

Selon un mode de réalisation particuliers, le cadre et le membre amortisseur définissent un espace de section substantiellement rectangulaire adapté à recevoir le capteur de section complémentaire.

De plus, le support comprend également une embase en fixation adaptée à solidariser le support à la structure, ladite embase étant intégrée venue de matière avec le cadre.

Egalement, le support est de plus pourvu d'une liaison électrique permettant de relier le capteur à la masse électrique.

Plus particulièrement, le support est réalisé moulé en matière plastique électriquement conductrice, chargée de particules métalliques, de sorte que la liaison électrique à la masse électrique soit assurée par le support lui-même.

### BREVE DESCRIPTION DES DESSINS

D'autres caractéristiques, buts et avantages de l'invention apparaîtront à la lecture de la description détaillée qui suit, et en regard des dessins annexés donnés à titre d'exemple non limitatif et sur lesquels:
La figure 1 est une vue 3D d'un capteur présenté devant un support.
La figure 2 également en 3D présente une face du capteur agencé dans le support.
La figure 3 présente une autre face, opposée à celle de la figure 2, du capteur agencé dans le support.
La figure 4 présente l'ensemble monté en vue de dessus.
La figure 5 présente le support de la figure 1 en position fermée.
La figure 6 présente une section du support permettant d'observer l'emplacement destiné au capteur.
Les figures 7 et 8 représentent une partie de la figure 6 grossie autour d'un membre d'isolation dudit capteur, la figure 7 étant sans capteur et, la figure 8 avec capteur.

### DESCRIPTION DES MODES DE REALISATION PREFERES

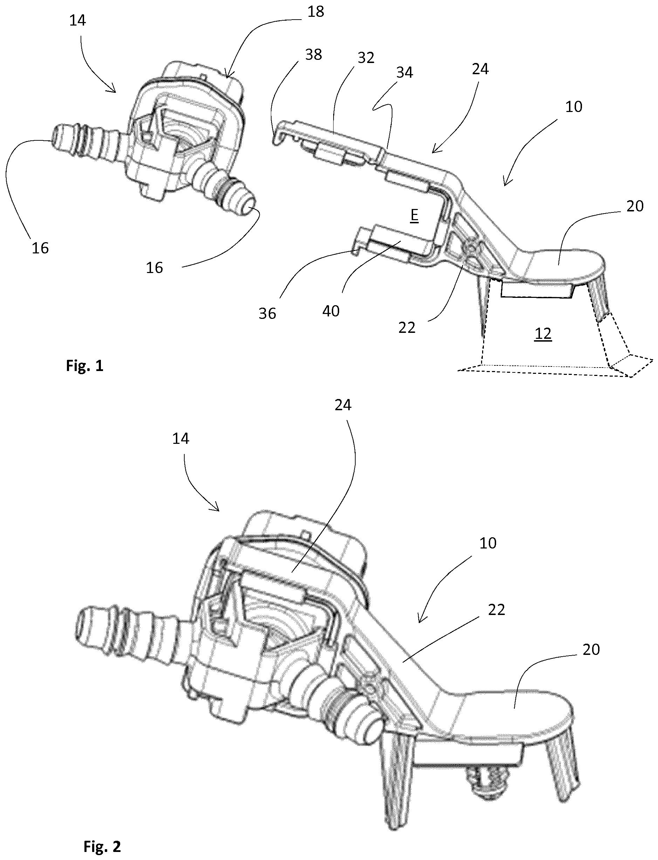

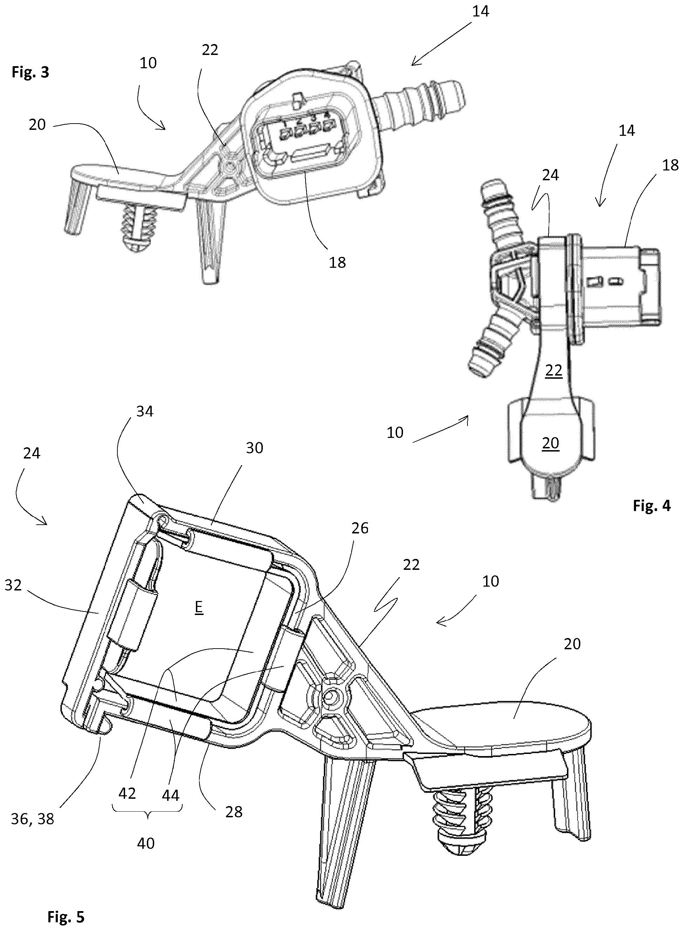

Les figures 1 à 4 présentent un support 10 monté sur un élément de structure 12 schématisé, le support 10 étant en position ouverte, figure 1, prêt à recevoir un capteur 14 et, en position fermée dans les figures 2, 3 et 4. Le capteur 14, dans l'exemple non-limitatif représenté, est un capteur de pression ayant un corps définissant d'une part une chambre de mesure dans laquelle un fluide peut circuler entre deux ouvertures 16 et, d'autre part, un moyen de mesure adapté à délivrer un signal électrique représentatif de la pression du fluide dans la chambre, ledit signal étant transmis via un connecteur électrique 18 visible en figure 3. Alternativement, le support 10 peut également recevoir d'autres types de capteurs tels des capteurs de températures, des débitmètres etc. Le connecteur 18 a une section carrée à laquelle est adaptée le support 10 qui comprend en outre une embase de fixation 20 complémentairement adaptée à la structure 12, un bras 22 qui s'étend depuis cette embase 20 jusqu'à un cadre 24 de section carré entourant un espace E complémentaire du connecteur 18. Le cadre 24 se définit, selon la représentation de la figure 1, comme ayant un côté 26 intégré au bras 22 et formant le fond de l'espace E et des extrémités duquel s'étendent parallèlement un côté inférieur 28 et un côté supérieur 30. Le quatrième côté 32 du cadre est articulé autour d'une charnière 34 arrangée à l'extrémité du bras supérieur 30, ledit quatrième côté 32 définissant une porte 32 pouvant être ouverte, telle que représentée en figure 1 pour permettre l'engagement du capteur 14, ou bien fermée, telle que représentée en figure 2, entourant et maintenant ledit capteur. En position fermée, la porte 32 se verrouille par l'engagement complémentaire d'un crochet inférieur 36 arrangé à l'extrémité du côté inférieur 28, extrémité distante du bras 22 et, d'un crochet de porte 38 arrangé à l'extrémité de la porte 32, extrémité distante de la charnière 34.

L'embase 20 du support comprend un membre plan des côtés duquel s'étendent des extensions latérales adaptées agencer le support sur la structure et, du centre duquel s'étend une cheville annelée destinée à être insérée dans un trou complémentaire, par exemple un trou fileté, pourvu dans la structure 12.

Alternativement à l'exemple choisi, un support similaire peut être prévu pour maintenir un capteur de section circulaire ou autre, le cadre 24 étant alors adapté avec des côtés arrondis.

Le support 10, représenté seul en position fermée en figure 5, comprend de plus un membre amortisseur 40 à quatre côtés agencés sur les faces intérieures du cadre 24 de sorte à entourer et border l'espace E et à se placer entre les côtés du cadre et le capteur lorsque celui-ci est mis en place.

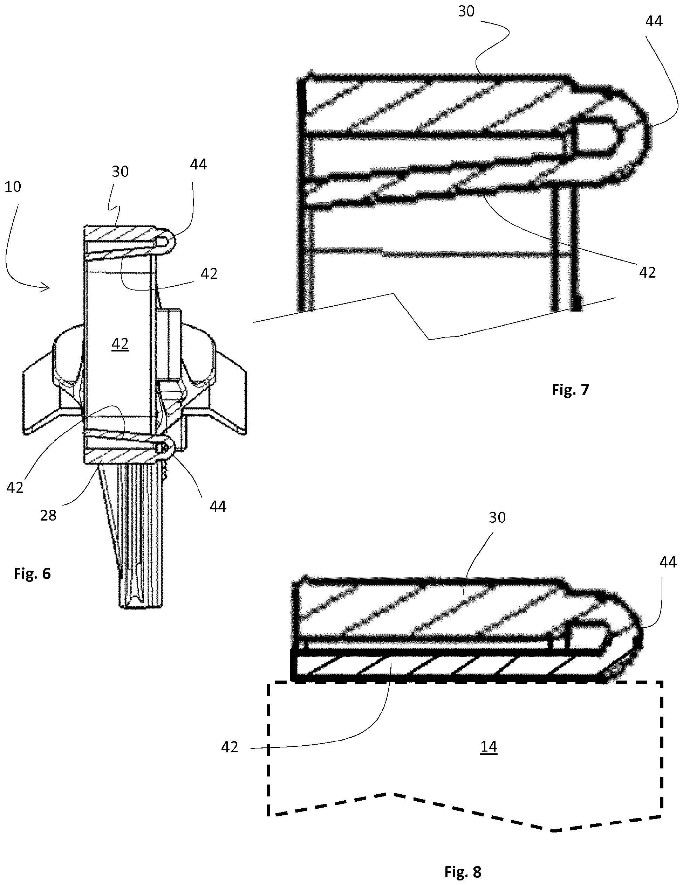

Particulièrement visible sur les figures 6, 7 et 8, chacun desdits quatre côtés du membre amortisseur 40 comprend une ailette de placage 42 et une charnière d'isolation 44 reliant ladite ailette 42 au côté du cadre contre lequel elle est agencée. La partie du membre d'isolation 40 agencées contre le fond 26 et les côtés inférieur 28 et supérieur 30 du cadre est une partie continue comprenant trois ailettes de placage 42 et, trois charnières d'isolation 44. La partie du membre d'isolation 40 agencées contre la porte 32, partie comprenant une quatrième ailette 42 et sa charnière 44 est séparée des trois autres ailettes.

Chaque ailette 42 est un élément plan et rectangulaire de dimensions équivalentes à celles de la face intérieure dudit côté du cadre contre lequel elle est agencée et, la charnière d'isolation 44 est un élément souple et élastique, recourbé sur environ un demi-tour et formant un U, une extrémité étant solidaire du cadre et l'autre étant solidaire de l'ailette de placage 42. Comme représenté, la charnière d'isolation 44 s'étend depuis un grand bord de l'ailette rectangulaire jusqu'à un grand bord complémentaire du cadre. Tel que présenté sur la figure 7, avant que le capteur 14 ne soit en place, la charnière 44 est détendue et l'ailette 42 est légèrement inclinée par rapport au côté du cadre et, lorsque le capteur est en place, figure 8, le capteur force sur les quatre ailettes 42, les charnières 44 se courbant en refermant le U de sorte que les ailettes 42 soient plaquées contre le corps du capteur. Les charnières 44 étant élastiques, elles agissent à l'instar d'un ressort et exercent sur les ailettes des forces transmise au capteur et qui le maintiennent en position dans le support. Le capteur 14 est ainsi maintenu flottant entre les ailettes de placage 42 et est ainsi isolé d'éventuelles vibrations se propageant dans la structure 12 et qui pourraient, sans se maintient, lui être transmise.

Tel que cela est représenté, le support 10 est avantageusement réalisé monobloc, moulé en plastique ainsi, l'embase 20, le bras 22, les quatre côtés du cadre 24, la charnière de porte 34 et le membre amortisseur 40, ailette 42 et charnière d'isolation 44, sont venus de matière, entièrement intégrés en une pièce.

Par ailleurs dans le but de ne pas perturber les mesures, le capteur est mis à la masse électrique par le support lui-même qui est moulé en un plastique électriquement conducteur chargé de particules métalliques. De préférence on choisira un plastique de type PA6 chargé et dont le résistance électrique de surface est de l'ordre de 154 Ohms, mesurés selon la méthode ASTM D257.

### REFERENCES UTILISEES

- E: espace

- 10: support
- 12: structure
- 14: capteur
- 16: ouverture
- 18: connecteur
- 20: embase
- 22: bras
- 24: cadre
- 26: côté formant le fond du cadre
- 28: côté inférieur
- 30: côté supérieur
- 32: quatrième côté - porte
- 34: charnière de porte
- 36: crochet inférieur
- 38: crochet de porte
- 40: membre amortisseur
- 42: ailette de placage
- 44: charnière d'isolation

## Revendications

1. Support (10) adapté à solidariser un capteur (14) à une structure (12), ledit support (10) comprenant un membre amortisseur (40) adapté, en utilisation, à isoler le capteur (14) de vibrations se propageant dans ladite structure, le support (10) étant une pièce monobloc avec le membre amortisseur (40), le support (10) est pourvu d'une liaison électrique permettant de relier le capteur (14) à la masse électrique, **caractérisé en ce que**
le membre amortisseur (40) est agencé dans un cadre (24) et adapté, en utilisation, à entourer le capteur (14) ;
le membre amortisseur (40) et le cadre (24) sont intégralement venus de matière.

2. Support (10) selon la revendication précédente dans lequel le cadre (24) est pourvu d'une ouverture par laquelle le capteur (14) peut être inséré dans le cadre (24) et, d'une porte de fermeture (32) adaptée à fermer ladite ouverture.

3. Support (10) selon la revendication 2 dans lequel une portion du membre amortisseur (40) est venue de matière avec la porte de fermeture (32).

4. Support (10) selon une quelconque des revendication 2 ou 3 comprenant de plus une charnière (34) agencée entre le cadre (24) et la porte de fermeture (32) de sorte à permettre l'ouverture et la fermeture de ladite porte (32) .

5. Support (10) selon la revendication 4 dans lequel la charnière de porte (34) est venue de matière avec le cadre (24), le membre amortisseur (40) et la porte (32).

6. Support (10) selon une quelconque des revendications précédentes dans lequel le membre amortisseur (40) comprend une portion élastique (44) et une portion rigide (42), la portion élastique (44) étant arrangée entre le cadre (24) et la portion rigide (42) de sorte que, en utilisation lorsque le capteur (14) est mis en place, la portion élastique (44) se déforme permettant à la portion rigide (42) de s'agencer contre ledit capteur, la portion élastique(44) exerçant sur ladite portion rigide (42) une force assurant le contact de la portion rigide (42) avec le capteur.

7. Support (10) selon l'une quelconque des revendications précédentes dans lequel le cadre (24) et le membre amortisseur (40) définissent un espace (E) de section substantiellement rectangulaire adapté à recevoir le capteur de section complémentaire.

8. Support (10) selon l'une quelconque des revendications précédentes comprenant de plus une embase (20) en fixation adaptée à solidariser le support (10) à la structure (12), ladite embase (20) étant intégrée venue de matière avec le cadre (24).

9. Support (10) selon l'une quelconque des revendications précédentes adapté à solidariser un capteur (14) à une structure métallique, le support (10) étant réalisé moulé en matière plastique électriquement conductrice, chargée de particules métalliques, de sorte que la liaison électrique à la masse électrique soit assurée par le support lui-même.

## Patentansprüche

1. Halter (10), welcher dafür ausgelegt ist, einen Sensor (14) mit einer Struktur (12) fest zu verbinden, wobei der Halter (10) ein Dämpfungselement (40) umfasst, das dafür ausgelegt ist, im Gebrauch den Sensor (14) von Schwingungen zu isolieren, die sich in der Struktur ausbreiten, wobei der Halter (10) ein mit dem Dämpfungselement (40) einstückig ausgebildetes Teil ist, wobei der Halter (10) mit einer elektrischen Verbindung versehen ist, die es ermöglicht, den Sensor (14) mit der elektrischen Masse zu verbinden, **dadurch gekennzeichnet, dass**
das Dämpfungselement (40) in einem Rahmen (24) angeordnet ist und dafür ausgelegt ist, im Gebrauch den Sensor (14) zu umgeben;
das Dämpfungselement (40) und der Rahmen (24) einstückig stoffschlüssig verbunden sind.

2. Halter (10) nach dem vorhergehenden Anspruch, wobei der Rahmen (24) mit einer Öffnung, durch welche der Sensor (14) in den Rahmen (24) eingesetzt werden kann, und mit einer Verschlusstür (32), die dafür ausgelegt ist, die Öffnung zu verschließen, versehen ist.

3. Halter (10) nach Anspruch 2, wobei ein Abschnitt des Dämpfungselements (40) stoffschlüssig mit der Verschlusstür (32) verbunden ist.

4. Halter (10) nach einem der Ansprüche 2 oder 3, welcher außerdem ein Scharnier (34) umfasst, das zwischen dem Rahmen (24) und der Verschlusstür (32) angeordnet ist, um das Öffnen und das Schließen der Tür (32) zu ermöglichen.

5. Halter (10) nach Anspruch 4, wobei das Türscharnier (34) mit dem Rahmen (24), dem Dämpfungselement (40) und der Tür (32) stoffschlüssig verbunden ist.

6. Halter (10) nach einem der vorhergehenden Ansprüche, wobei das Dämpfungselement (40) einen elastischen Abschnitt (44) und einen starren Abschnitt (42) umfasst, wobei der elastische Abschnitt (44) zwischen dem Rahmen (24) und dem starren Abschnitt (42) angeordnet ist, so dass im Gebrauch, wenn der Sensor (14) angebracht ist, der elastische Abschnitt (44) sich verformt und dabei ermöglicht, dass sich der starre Abschnitt (42) an den Sensor anlegt, wobei der elastische Abschnitt (44) auf den starren Abschnitt (42) eine Kraft ausübt, die den Kontakt des starren Abschnitts (42) mit dem Sensor sicherstellt.

7. Halter (10) nach einem der vorhergehenden Ansprüche, wobei der Rahmen (24) und das Dämpfungselement (40) einen Raum (E) mit im Wesentlichen rechteckigem Querschnitt definieren, der dafür ausgelegt ist. den Sensor mi komplementärem Querschnitt aufzunehmen.

8. Halter (10) nach einem der vorhergehenden Ansprüche, welcher außerdem einen Befestigungsfuß (20) umfasst, der dafür ausgelegt ist, den Halter (10) mit der Struktur (12) fest zu verbinden, wobei der Fuß (20) mit dem Rahmen (24) einstückig stoffschlüssig verbunden ist.

9. Halter (10) nach einem der vorhergehenden Ansprüche, welcher dafür ausgelegt ist, einen Sensor (14) mit einer metallischen Struktur fest zu verbinden, wobei der Halter (10) aus elektrisch leitendem Kunststoff geformt hergestellt ist, der Metallpartikel enthält, so dass die elektrische Verbindung mit der elektrischen Masse durch den Halter selbst sichergestellt ist.

## Claims

1. Support (10) suitable for securing a sensor (14) to a structure (12), said support (10) comprising a damping member (40) suitable, in use, for insulating the sensor (14) from vibrations propagated in said structure, the support (10) being a single-piece part with the damping member (40), the support (10) is provided with an electrical link allowing the sensor (14) to be linked to the electrical ground, **characterized in that**
the damping member (40) is arranged in a frame (24) and adapted, in use, to surround the sensor (14);
the damping member (40) and the frame (24) are entirely made of a single piece.

2. Support (10) according to the preceding claim, wherein the frame (24) is provided with an opening through which the sensor (14) can be inserted into the frame (24) and, a closing door (32) suitable for closing said opening.

3. Support (10) according to Claim 2, wherein a portion of the damping member (40) is made of a piece with the closing door (32).

4. Support (10) according to either one of Claims 2 and 3 also comprising a hinge (34) arranged between the frame (24) and the closing door (32) so as to allow said door (32) to be opened and closed.

5. Support (10) according to Claim 4, wherein the door hinge (34) is made of a piece with the frame (24), the damping member (40) and the door (32).

6. Support (10) according to any one of the preceding claims, wherein the damping member (40) comprises an elastic portion (44) and a rigid portion (42), the elastic portion (44) being arranged between the frame (24) and the rigid portion (42) so that, in use, when the sensor (14) is in place, the elastic portion (44) is deformed, allowing the rigid portion (42) to be arranged against said sensor, the elastic portion (44) exerting, on said rigid portion (42), a force ensuring the rigid portion (42) is in contact with the sensor.

7. Support (10) according to any one of the preceding claims, wherein the frame (24) and the damping member (40) define a space (E) of substantially rectangular section suitable for receiving the sensor of complementary section.

8. Support (10) according to any one of the preceding claims, also comprising a fixing base (20) suitable for securing the support (10) to the structure (12), said base (20) being integrated in a single piece with the frame (24).

9. Support (10) according to any one of the preceding claims, suitable for securing a sensor (14) to a metal structure, the support (10) being produced by moulding electrically conductive plastic material filled with metal particles, so that the electrical link to the electrical ground is ensured by the support itself.
